# EUROPEAN PATENT APPLICATION

(11) **EP 4 019 788 A1**
(43) Date of publication of application: **29.06.2022**
(21) Application number: 20383138.3
(22) Date of filing: 22.12.2020
(51) Int. Cl.: F16B 5/02

(54) **BLIND FASTENING WASHER, BLIND FASTENING SYSTEM AND METHODS FOR CONNECTING TWO PARTS USING SAID BLIND FASTENING SYSTEM**

(71) Applicant: Wunder Hexicon S.L., 35500 Arrecife (Las Palmas) (ES); Gascón, Pablo, 35500 Arrecife (Las Palmas) (ES)
(72) Inventor: Gascón, Pablo, 35500 Arrecife (LAS PALMAS) (ES)
(74) Representative: Balder IP Law, S.L.

(57) **Abstract**

The invention discloses a blind fastening washer (10) comprising: a base (11; a body (12) with an elongated cross-section and having a longitudinal orifice (121); and two longitudinal protrusions (13) stemming from a distal surface (122) of the body (12) at either side of the orifice (121). When a rectangular bolt (20) is introduced into the orifice (121), the head (21) of the bolt (20) fits snugly between the two longitudinal protrusions (13), said protrusions (13) preventing rotation of the bolt (20) with respect to the washer (10). The invention further discloses a blind fastening system comprising the above washer (10), a bolt (20), a nut (30), and optionally a retainer (40). The invention further discloses methods for fastening two parts (A, B) using the system of the invention.

## Description

### OBJECT OF THE INVENTION

The invention belongs to the field of high strength bolting systems where only one side is accessible.

A first aspect of the invention discloses a blind fastening washer configured to be used in combination with a nut and, a rectangular head bolt and, optionally, a pair of retainers.

A second aspect of the invention discloses a blind fastening system comprising the abovementioned washer, nut, rectangular head bolt and, optionally, the pair of retainers.

A third aspect of the invention discloses a method for connecting two parts when the system is provided in a disassembled condition.

A fourth aspect of the invention discloses a method for connecting two parts when the system is provided in a particular preassembled condition, respectively with and without the optional retainers.

### PRIOR ART

Due to aesthetic, economic, and structural performance, the use of structural hollow sections as columns in continuous moment resisting and nominally pinned construction is attractive. Connecting the beams to these sections is somewhat problematic as there is no access to the interior of the section to allow for the tightening of a standard bolt. Therefore, bolts that may be tightened from one side, i.e. blind bolts, have been developed to facilitate the use of site bolting for this arrangement. Blind bolts are usually used, e.g. in the construction of wind towers.

A known type of blind bolt system is based on the deformation of a collar provided around a screw. Once the screw is passed through the opening, the collar is deformed against a side of the opening opposite to that from which the screw was introduced. The collar can be deformed in several ways depending on the particular design. For example, in document US2005123373A, the deformation of the collar is caused by the rotation of the screw. There exist several alternative methods to cause the deformation of the collar, such as an enlargement of the end of the screw, the use of an essentially conical additional part, etc. An important drawback of this type of blind bolt system is that unfastening requires breaking of the collar and/or nut.

A further known type of blind bolt system is based on the use of a collapsible washer. Document EP1131563A1 discloses a blind bolt system where a collapsible washer provided around a screw is introduced through the opening in a collapsed condition and then, by means of a rotation of the screw, the collapsible washer returns to an expanded condition providing support for fastening the screw against the side of the opening opposite to that from which the screw was introduced. However, these blind bolt systems are disadvantageous in that, given the large number of parts required and the need for a careful introduction of the washer in the collapsed condition, it takes too much time for fastening each of the fasteners.

Consequently, there still exists a need for more convenient blind bolt systems.

### SUMMARY

The present invention solves the aforementioned drawbacks by means of a novel blind fastening washer having a particular design that makes fastening of two parts with access from one side only easy, fast and convenient. The blind fastening washer is used in combination with a nut and a rectangular head bolt for rendering a blind fastening system. Methods for connecting two parts using said blind fastening system are also disclosed.

A number of terms and expressions used in the description of the present invention are disclosed herein below.
Proximal/distal: In the present document, these terms have the usual meaning they are given in the medical field. Namely, the term *"proximal'* refers to a side, end, or portion located closest to the operator using the system of the invention, while the term *"distal'* refers to a side, end or portion located farthest to the operator using the washer or system of the invention. In other words, a side of the parts to be connected where the operator is located is the proximal side, while an opposite side of the parts to be connected, which is not accessible for the operator, is the distal side.
Longitudinal/transverse direction: In the present document, the *"longitudinal direction"* refers to the direction along which the washer, nut and bolt of the invention are fastened to one another. The *"transverse direction"* refers to any direction contained in a plane that is perpendicular to the longitudinal direction. In particular, unless the context indicates otherwise, the *"cross-section"* of any element or portion refers to a cross-section along a transverse plane.
Elongated: In the present document, the term *"elongated'* refers to a two-dimensional form where a first dimension is substantially larger than a second dimension essentially perpendicular thereto. A central axis of the larger, first dimension is referred to as *"the axis"* of said elongated form.
Cylinder: In the present document, unless the context indicates otherwise, a *"cylinder"* is a body whose surface is generated by a line, called the generatrix, moving parallel to itself and always passing through a plane curve called the directrix. This *"cylinder"* could also be defined as a prism whose cross-section is not necessarily a polygonal plane figure, but generally speaking any closed plane curve. Taking this definition into account, a traditional cylinder would merely be a particular instance of the presently defined cylinder where the directrix is a circle and the generatrix is perpendicular to the plane of the circle.

A first aspect of the present invention discloses a blind fastening washer essentially comprising the following elements:
i) Base
   The base is the most proximal portion of the washer of the invention. The base could have any configuration provided it has as a distal surface configured for abutting against a proximal surface of the parts to be connected.
   In principle, the distal surface could have any configuration provided it can firmly abut against a proximal surface of the parts to be connected. For example, where the parts to be connected are cylindrical, such as the dowels of a wind power tower, the distal surface of the base could be cylindrical for more firmly seating against the proximal surface of these parts. Alternatively, where the parts to be connected are spherical, the distal surface could be spherical. However, in a particularly preferred embodiment of the invention, the distal surface of the base is flat, i.e. planar. This configuration is advantageous not only for the connection of essentially planar plates, but also for the connection of cylindrical or spherical plates having a very large radius in comparison to the size of the washer.
   Further, depending on the configuration of the parts to be connected and on a possible inclination of the hole where the washer will be introduced with respect to the surface of said parts, the flat distal surface of the base could be inclined with respect to the longitudinal direction. This configuration could be advantageous, e.g. in confined spaces where there is no room for freely using conventional tools. However, in a particularly preferred embodiment of the present invention, the flat distal surface of the base is perpendicular to the longitudinal direction.
   The base could generally speaking have any shape provided the above features are present, but in a particularly preferred embodiment of the invention, a shape of the base is cylindrical with a circular directrix and a generatrix parallel to the longitudinal direction. This traditional cylinder configuration is convenient and easy to manufacture.
   In a particularly preferred embodiment, the distal surface of the base may comprise an annular groove configured for receiving an O-ring. This embodiment is particularly useful for providing watertight connections.
   In a further preferred embodiment, a proximal surface of the base is provided with at least one latch configured for engaging essentially radial tooths provided in a distal portion of the nut. This configuration is advantageous in that unthreading of the nut is further prevented.
ii) Body
   The body has an elongated cross-section stemming along a longitudinal direction from a portion of the distal surface of the base. Indeed, as disclosed in more detailed further down in the present document, the body protrudes from a portion of the distal surface of the base that is smaller than the total distal surface of the base, thus allowing part of said distal surface to abut against the proximal surface of the parts to be connected in areas adjacent the hole when the washer is introduced through said hole. Further, the body is intended to be introduced in an elongated hole of the parts to be connected. The elongated cross-section of the body is designed for preventing said body from rotating within said hole.
   In particular, according to a preferred embodiment of the invention, a shape of the body is cylindrical with an elongated directrix and a generatrix parallel to the longitudinal direction. More preferably, the elongated directrix could be essentially rectangular, e.g. rectangular with rounded corners. This shape is advantageous because it is easy to manufacture, and it corresponds with the most frequent shape of elongated holes provided for the connection of parts.
   The body of the washer further comprises a longitudinal orifice. This orifice is normally cylindrical in the traditional sense of the word and centrally located in the body for receiving therethrough a bolt, screw, or the like. The longitudinal orifice has a distal end at the distal surface of the body and a proximal end at the proximal end of the base, and therefore a bolt or the like can be introduced through the distal end of the orifice and exit through the proximal end of the orifice.
iii) Longitudinal protrusion
   The washer of the invention comprises at least one longitudinal protrusion stemming from a distal surface of the body adjacent the orifice. This protrusion thus prevents an elongated head of a bolt passing through the longitudinal orifice of the washer from rotating with respect to the washer. Indeed, when a shank of a bolt having a head with an elongated cross-section is longitudinally introduced in a proximal direction into the orifice of the body, with a first axis of the head of the bolt in perpendicular to a second axis of the body, until a proximal surface of the head of the bolt rests on said distal surface of the body, the head of the bolt abuts against the longitudinal protrusion. Thus, said protrusion prevents rotation of the bolt with respect to the washer.
   In a particularly preferred embodiment, the longitudinal protrusion has an essentially flat inner wall. Even more preferably, this essentially flat inner wall is essentially tangent to a distal end of the orifice of the body. This configuration provides the sides of the elongated head of the bolt with a flat surface to abut against, thereby distributing the load throughout the whole surface of the inner walls.
   In still one more particularly preferred embodiment of the invention, the washer comprises two longitudinal protrusions stemming from the distal surface at either side of the orifice. With this configuration, when the shank of the bolt is introduced longitudinally in the proximal direction into the orifice of the body, the head of the bolt fits snugly between the two longitudinal protrusions. The bolt is therefore prevented from rotating. This configuration is advantageous in that, when a considerable amount of torque is applied, the load spreads throughout the washer in a more balanced manner.

Now, the above washer can be combined with a conventional bolt having an elongated head (commonly known as a "rectangular bolt"), a conventional nut and, optionally, a pair of retainers. The combination of these parts renders a novel blind fastening system that is simpler, faster and more convenient than currently known blind fastening systems. Further, unfastening of this blind fastening system is easy, and it does not require the destruction of any of the elements conforming it.

Therefore, a second aspect of the invention is directed to a blind fastening system comprising the above-disclosed washer, a bolt, a nut and, optionally, a pair of retainers. These elements are now disclosed in more detail:
a) Washer
   The washer of the system is according to the description provided above.
b) Bolt
   The bolt comprises a head with an elongated cross-section and a shank having a threaded portion. A diameter of the shank is configured for passing through the orifice of the washer, and the head of the bolt is configured to abut against the longitudinal protrusion of the washer when the first axis of the head is perpendicular to the second axis of the body. Thus, said longitudinal protrusions (prevent rotation of the head of the bolt with respect to the washer.
   In a preferred embodiment of the invention, the cross-section of the head of the bolt is coincident with the cross-section of the body of the washer. This configuration is advantageous in that, when the bolt is housed within the orifice of the washer with the first and second axis in parallel, a lateral surface of the head of the bolt and a lateral surface of the body of the washer are essentially continuous. Thus, when the system is pre-assembled as disclosed herein below, there are no radially protruding portions that could hinder the introduction of the pre-assembled system through the hole of the parts to be connected.
c) Nut
   The nut is configured for being threaded to the threaded portion of the shank of the bolt. The nut normally has a conventional design, preferably with an hexagonal external surface.
d) Retainers
   Optionally, the system of the invention comprises two retainers each comprising a proximal surface, a distal surface, and an essentially flat lateral surface matching a lateral surface of the body. Each retainer further comprises at least one elongated projection protruding in a proximal direction from the proximal surface adjacent the lateral surface, as well as one bulge protruding in a distal direction from the distal surface.
   In order for the bolt to match the retainers, the proximal surface of the head of the bolt further comprises two recesses configured for receiving the bulge of each retainer and a pair of first longitudinal grooves configured for receiving the elongated projections of each retainer. Furthermore, a distal portion of each lateral surface of the body further comprises a pair of second longitudinal grooves configured for receiving the elongated projections of each retainer.

In a particularly preferred embodiment of the invention, the above system is provided in a disassembled condition. In the disassembled condition, the washer, the bolt and the nut are not connected ones to the others, i.e. they are provided as separate elements. The pair of retainers, if present, are also provided as separate elements.

In an alternative preferred embodiment of the invention, the blind fastening system is provided in a pre-assembled condition. In the pre-assembled condition, the shank of the bolt is housed within the orifice of the body of the washer with the first axis of the head being parallel to the second axis of the body, such that the proximal surface of the head of the bolt rests on distal surfaces of the two longitudinal protrusions of the washer. The nut is threaded to a length of the threaded portion of the shank of the nut protruding from a proximal end of the orifice of the washer. The pair of retainers, if present, are provided as separate elements.

A third aspect of the present invention is directed to a method for fastening two parts using the disassembled blind fastening system disclosed above, where the two parts have respective elongated holes aligned in the longitudinal direction. The method comprises the following steps:
1. Introducing longitudinally in a distal direction the head of the bolt through the holes, with the first axis of said head in parallel to a common third axis of the holes, until the head of the bolt makes it completely through the holes. The head of the bolt has made it completely through the holes when the position of a proximal surface of the head of the bolt is distal with respect to the distal surface of the most distal part.
2. Rotating the bolt until the first axis of the head is essentially perpendicular to the second axis of the body.
3. Introducing longitudinally in a distal direction the body of the washer through the holes with the second axis of said body in parallel to the third axis of the hole, such that the shank of the bolt passes through the orifice of the washer, until the head of the bolt fits snugly between the longitudinal protrusions of the washer.
4. Threading the nut to the length of the threaded portion of the shank of the bolt protruding from the proximal end of the orifice of the washer.

A fourth aspect of the present invention is directed to a method for fastening two parts using the pre-assembled blind fastening system disclosed above, where the two parts have respective elongated holes aligned in the longitudinal direction. This method is faster and more convenient in comparison with the above-disclosed method where the washer, the bolt and the nut are provided as separate elements.

A first variation of the method of the fourth aspect where no retainers are employed comprises the following steps:
1. Introducing longitudinally in a distal direction the head of the bolt and the body of the washer through the holes, with the respective first and second axis of said head and said body in parallel to the common third axis of the holes, until the head of the bolt makes it completely through the holes.
2. Rotating the bolt until the first axis of the head is essentially perpendicular to the second axis of the body.
3. Threading the nut further along the length of the threaded portion of the shank of the bolt protruding from the proximal end of the orifice of the washer.

A second variation of the method of the fourth aspect where retainers are employed comprises the following steps:
1. Introducing the retainers through the holes longitudinally in a distal direction.
2. Displacing the retainers laterally with the base in contact with a distal surface surrounding the holes until the inner surface is essentially flush with an edge of the holes and the elongated projections project proximally through the holes. The lateral displacement refers to a displacement in perpendicular to the common third axis of the holes.
3. Introducing longitudinally in a distal direction the head of the bolt and the body of the washer through the holes, with the respective first and second axis of said head and said body in parallel to the common third axis of the holes, such that the projections of the retainers slide longitudinally along the grooves of the body of the washer, until the head of the bolt makes it completely through the holes past the distal surface of the retainers.
4. Rotating the bolt until the first axis of the head is essentially perpendicular to the second axis of the body.
5. Pulling the bolt proximally until the proximal surface of the head of the bolt abuts against the distal surface of the retainers with the bulges of said retainers housed within the recesses of said proximal surface of the head of the bolt.
6. Threading the nut further along the length of the threaded portion of the shank of the bolt protruding from the proximal end of the orifice of the washer.

### BRIEF DESCRIPTION OF THE DRAWINGS

Figs. 1a and 1b show respective views of a blind fastening washer according to the present invention.
Figs. 2a and 2b show respective views of a bolt belonging to the system of the present invention.
Figs. 3a and 3b show respective views of a nut belonging to the system of the present invention.
Figs. 4a-4f show the steps of a method for fastening two parts using the system of the present invention in a disassembled condition.
Figs. 5a-5f show the steps of a method for fastening two parts using the system of the present invention in an assembled condition when no retainers are employed.
Figs. 6a and 6b show perspective views of an optional retainer belonging to the system of the present invention.
Fig. 7 shows a perspective view of the bolt when used in combination with the optional retainers.
Fig. 8 shows a perspective view of the washer when used in combination with the optional retainers.
Figs. 9a-9g show the steps of a method for fastening two parts using the system of the present invention in an assembled condition when retainers are employed.

### DESCRIPTION OF A PREFERRED EMBODIMENT

The present invention is disclosed hereinbelow making reference to the attached drawings.
**Washer**

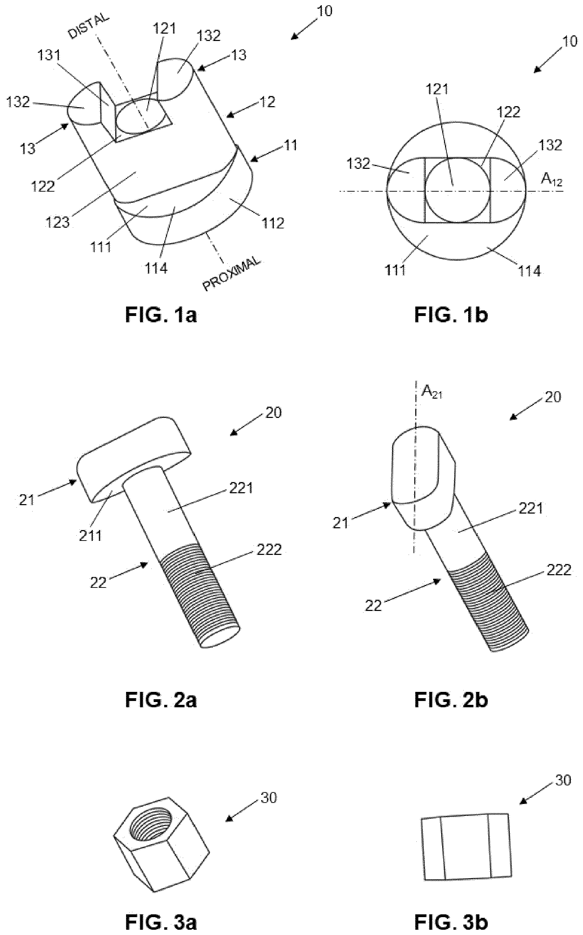

   Figs. 1a and 1b show two different views of an exemplary washer (10) according to the present invention. The washer (10) is formed by three distinct portions: a base (11), a body (12), and two protrusions (13).
   The base (11) is cylindrical in the traditional sense of the term, having a distal surface (111), a lateral wall (112), and a proximal surface (113). The distal and proximal surfaces (111) of the base (11) are planar.
   The body (12) emerges from a portion of the distal surface (111) of the base (11). More specifically, the body (12) has a cylindrical shape having a rectangular directrix and a longitudinal generatrix, i.e. a generatrix perpendicular to the distal surface (111) of the base (11). Thus, rectangular directrix has rounded ends. The body (12) therefore has a constant cross-section having a rectangular shape with rounded ends. This cross-sectional shape is convenient for the introduction of the washer through aligned elongated holes (H_{A}, H_{B}) of two parts to be connected, as disclosed in more detail further down in the present document. The essentially rectangular cross-section of the body (12) has a major axis (in the present document, axis A₁₂) and a minor axis not specifically shown in the figures. The body (12) as a distal surface (122) where a central orifice (121) is located. The central orifice (121) goes through the whole body (12) and base (11).
   The longitudinal protrusions (13) emerge from the ends of the elongated distal surface (122) of the base (12) at either side of a distal end of the orifice (121). Each protrusion (13) is a pillar-shaped body having a semi-circular cross-section, with a planar inner surface (131) of each protrusion (13) being tangent to the distal end of the orifice (121). The top of each protrusion (13) comprises a planar distal surface (132).
**Bolt**
   Figs. 2a and 2b show an exemplary bolt (20) according to the present invention. The bolt (20) is an essentially conventional bolt (20) having a head (21) and a shank (22). Naturally, the size of the bolt (20) is configured for being introduced through the orifice (121) of the washer (10), as disclosed in more detail further down in the present document.
   The head (21) of the bolt (20) has a cylindrical shape having a rectangular directrix and a longitudinal generatrix, where the rectangular directrix has rounded ends. In particular, the shape of the directrix is the same as that of the body (12) of the washer (20) disclosed above. Thus, the cross-section of the head (21) of the bolt (20) is essentially identical to the cross-section of the body (12) of the washer (20). The rectangular cross-section of the head (21) has a major axis (A₂₁) and a minor axis (not specifically shown in the figures). Further, the head (21) of the bolt (20) as a planar proximal surface (211).
   The shank (22) is cylindrical in the traditional sense, having a distal, unthreaded portion (221) and a proximal, threaded portion (122).
   While not shown in the drawings, the proximal end of the shank (22) of the bolt (20) may further comprise a distal protrusion configured for being engaged with a tool. This protrusion, e.g. having an hexalobular, hexagonal or star-shaped cross-section, allows an operator to easily rotate the bolt (20) even when only access to its proximal portion is possible.
**Nut**
   Figs. 3a and 3b show an exemplary nut (30) according to the present invention. The nut (30) is an essentially conventional hexagonal nut (30) having a size configured for being threaded to the threaded portion (222) of the bolt (20).

The elements disclosed above combined make up a blind connection system that can be provided in two distinct conditions: a disassembled condition and a pre-assembled condition. The two configurations of the system, as well as respective methods for using said systems, are disclosed hereinbelow.

### Disassembled system

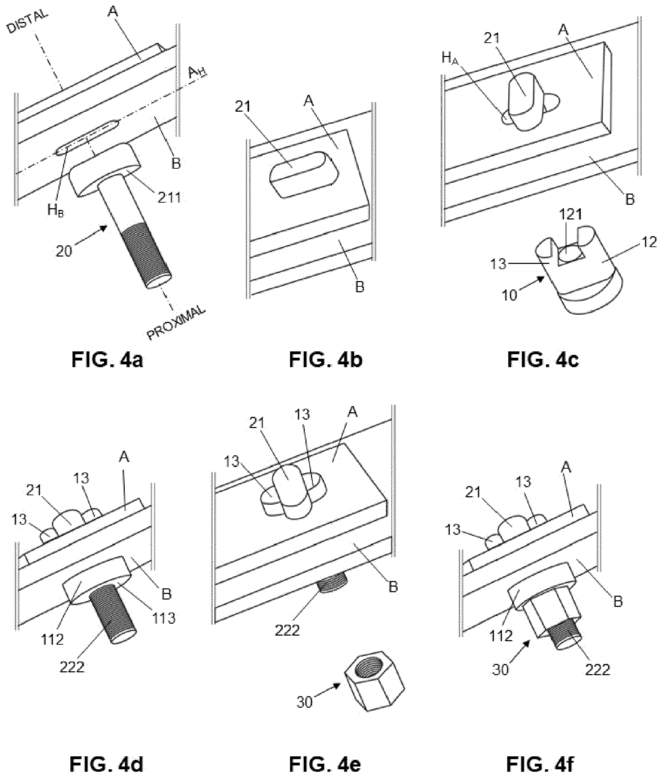

Figs. 4a-4f show a method for fastening two planar parts (A, B) having respective elongated holes (H_{A}, H_{B}) using the system of the invention in a disassembled condition. As disclosed above, the system of the invention comprises a washer (10), a bolt (20) and a nut (30) which are provided separately.

The two parts (A, B) are placed one against the other with the two elongated holes (H_{A}, H_{B}) aligned in the longitudinal direction. In this position, the two elongated holes (H_{A}, H_{B}) have a common major axis, namely common axis (A_{H}). Now, as shown in Fig. 4a, the head (21) of the bolt (20) is first introduced through the holes (H_{A}, H_{B}) in a longitudinal in a distal direction, i.e. first passing through hole (H_{B}) of proximal part (B) and then through hole (H_{A}) of distal part (A). Now, the shape of the elongated holes (H_{A}, H_{B}) matches the shape of the head (21) of the bolt (20). This means that the shape of the elongated holes (H_{A}, H_{B}) is essentially the same as that of the head (21), the elongated holes (H_{A}, H_{B}) being just larger enough for the head (21) to pass through when a first axis (A₂₁) of the head (21) is parallel to the third axis (A_{H}) of the holes (H_{A}, H_{B}). The result of this step is shown in Fig. 4b, where the head (21) of the bolt (20) has passed completely through both holes (H_{A}, H_{B}). The proximal surface (211) of the head (21) of the bolt (20) has therefore passed completely to the distal surface of part (A). Then, the head (21) of the bolt (20) can be rotated essentially 90°, as shown in Fig. 4c. In the rotated position, when the first axis (A₂₁) of the head (21) is essentially perpendicular to the third axis (A_{H}) of the holes (H_{A}, H_{B}), the head (21) can no longer be extracted in a proximal direction. Then, the washer (10) is introduced through the holes (H_{A}, H_{B}) of the parts (A, B) to be assembled. To do so, the washer (10) is oriented such that the second axis (A₁₂) of the body (12) of the washer (10) is parallel to the third axis (A_{H}) of the holes (H_{A}, H_{B}). The washer (10) is introduced at least until the head (21) of the bolt (20) fits snugly between the two protrusions (13) of the washer (10). Naturally, the first axis (A₂₁) of the head (21) is perpendicular to the second axis (A₁₂) of the body (12) of the washer (10). During this process, the shank (22) of the bolt (20) passes through the orifice (121) of the washer (20). The result of this step is shown in Fig. 4d. With the head (21) of the bolt (20) placed between the two protrusions (13) of the washer (10), the bolt (20) can no longer be rotated. If pushed firmly, the distal surface (111) of the base (11) of the washer (10) will abut against the proximal surface of part (B). Now, as shown in Fig. 4e the operator needs only to screw nut (30) to a threaded portion (222) of the shank (22) of the bolt (20) protruding from a proximal end of the orifice (121) of the washer (10).The nut (30) is threaded until a distal surface thereof abuts against the proximal surface (113) of the base (11) of the washer (10). Further tightening causes the nut (20) to be pulled in the proximal direction, thereby firmly fastening parts (A, B) together.

### Pre-assembled system with no retainers

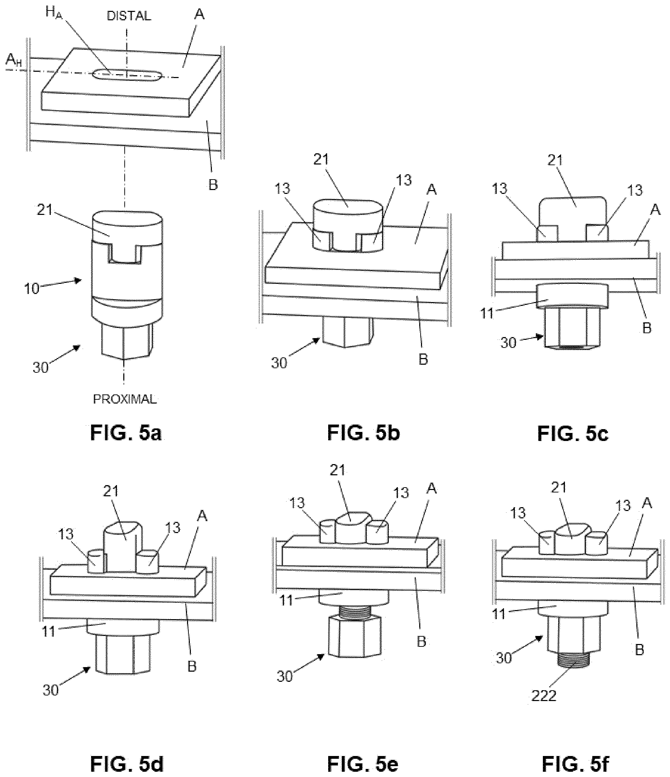

Figs. 5a-5f show a method for fastening two planar parts (A, B) having respective elongated holes (H_{A}, H_{B}) using the system of the invention in a pre-assembled condition.

In the pre-assembled system of the invention, the bolt (20) is longitudinally introduced into the orifice (121) of the washer (20) in a proximal direction, with the proximal surface (211) of the head (21) of the bolt (20) resting against the distal surface (132) of the longitudinal protrusions (13) of the washer (10). Further, the first axis (A₂₁) of the head (21) of the bolt (20) is parallel to the second axis (A₁₂) of the body (12) of the washer (10). Additionally, the nut (30) is threaded to the threaded portion (222) of the shank (22) of the bolt (20), the distal surface of the nut (30) abutting against the proximal surface (113) of the base (11) of the washer (11). Since, as disclosed above, the shape of the cross-section of the head (21) of the bolt (20) is the same as the shape of the cross-section of the body (12) of the washer (10), most of the lateral surface of such a pre-assembled system, i.e. the radially external surface thereof, is essentially continuous. Only portions of the base (11) protrude radially.

Now, the method starts in a situation where the two parts (A, B) are placed one against the other with the two elongated holes (H_{A}, H_{B}) aligned in the longitudinal direction. As shown in Fig. 5a, the method for fastening two planar parts (A, B) then comprises a first step where the head (21) of the bolt (20), along with a distal portion of the washer (10), is introduced longitudinally into the holes (H_{A}, H_{B}). To introduce the head (21) of the bolt (20) and the distal portion of the washer (10) through holes (H_{A}, H_{B}), naturally the first axis (A₂₁) of the head (21) of the bolt (20) and the second axis (A₁₂) of the body (12) of the washer (10) need be parallel to the common axis (A_{H}) of holes (H_{A}, H_{B}). The result of this step is shown in Fig. 5b. Fig. 5c further shows that the introduction is such that the distal surface (111) of the base (11) of the washer (10) abuts against the proximal portion of proximal part (B). Then, as shown in Fig. 5d, the bolt (20) is rotated essentially 90°. This step can be carried out by the operator merely by grabbing the base (11) of the washer (10) and turning 90° in the clockwise direction. Then, the operator can pull from the nut (30). As shown in Fig. 5e, the bolt (20) thus moves in the proximal direction as the head (21) of the nut (20) fits snugly between the protrusions (13) of the washer (10). In this situation, the bolt (20) can no longer rotate with respect to the washer (10). Finally, the operator needs only rotate the nut (30) until it firmly abuts against the proximal surface (113) of the base (11) of the washer (10).

### Pre-assembled system with retainers

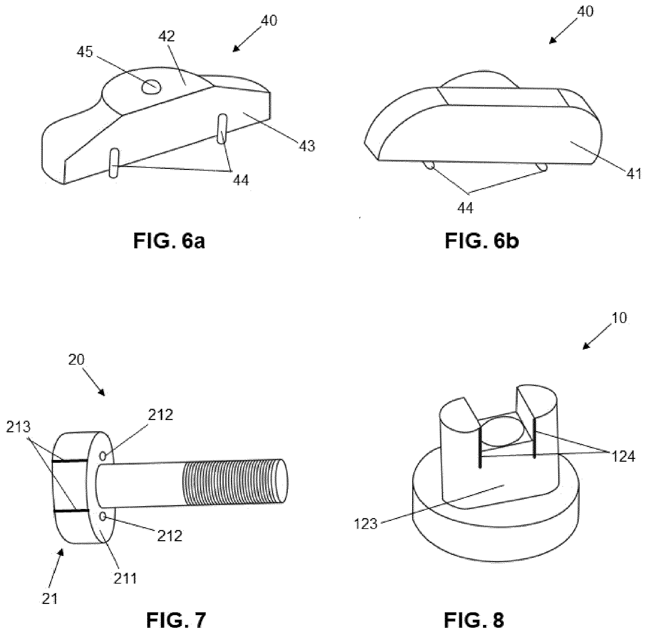

Figs. 6a and 6b show a perspective view of an exemplary retainer (40) according to the present invention. The retainer (40) has an elongated shape suitable to pass through the elongated holes (H_{A}, H_{B}) of the parts to be connected. The retainer (40) has a flat proximal surface (41) and a flat distal surface (42) parallel thereto. The proximal surface (41) is intended to rest on a distal surface (DS) surrounding the holes (H_{A}, H_{B}) of the parts to be connected, while the distal surface (42) is intended for the proximal surface (211) of the head (21) of the bolt (20) to rest thereon. The distal surface (42) of the retainer (40) further comprises a bulge (45). In addition, the retainer (40) further comprises a pair of elongated projections (44) provided at a lateral surface (43) of the retainer (40) and protruding in a proximal direction from the proximal surface (41) thereof.

Fig. 7 shows a bolt (20) configured to be used in combination with the retainers (40). This bolt (20) has a pair of first longitudinal grooves (213) provided on a lateral side of the head (21) of the bolt (2). Thus, when the bolt (2) is introduced through the holes (H_{A}, H_{B}) of the parts to be connected, the two elongated projections (44) slide along said pair of first longitudinal grooves (213). The bolt (20) further comprises a pair of holes (212) provided on the proximal surface (211) of the head (21). Thus, when the proximal surface (211) of the head (21) of the bolt (20) abuts against the distal surface (42) of the retainer (40), the bulge (45) enters into the holes (212). No rotation of the bolt (20) relative the retainers (40) is therefore allowed.

Fig. 8 shows a washer (10) configured to be used in combination with the retainers (40). This washer (10) has a pair of longitudinal grooves (124) configured for receiving said elongated projections (44) of each retainer (45). In particular, the longitudinal grooves (124) are provided in a distal portion of a lateral surface (123) of the body (12) of the washer (10). As disclosed in more detail below, when the retainers (40) are positioned with the elongated projections (44) introduced within the holes (H_{A}, H_{B}) of the parts to be connected, the washer (10) can subsequently also be introduced with said projections (44) sliding within the grooves (124).

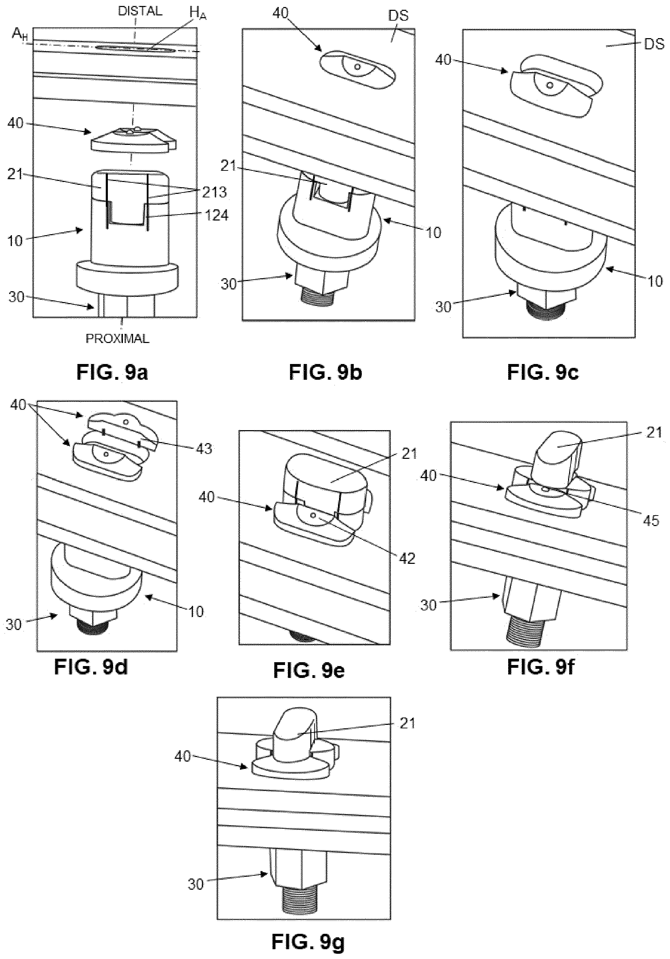

Finally, Figs. 7a-7g show a method for fastening two planar parts (A, B) having respective elongated holes (H_{A}, H_{B}) using the system of the invention in a pre-assembled condition, where the system further comprises a pair of retainers (40). The method begins from an initial situation, shown in Fig. 9a, where the system comprising washer (10), bolt (20) and nut (30) is pre-assembled and the retainers (40) are provided separately. Then, as shown in Fig. 9b, a first retainer (40) is introduced through the holes (H_{A}, H_{B}) of the parts to be connected distally from a proximal side thereof. Once completely introduced, the retainer (40) is displaced laterally, i.e. in perpendicular to the common third axis (A_{H}) of the holes (H_{A}, H_{B}), as shown in Fig. 9c. The retainer (40) is positioned such that the lateral surface (43) thereof is flush with the edge of the long side of the elongated holes (H_{A}, H_{B}) of the parts to be connected, with the projections (44) protruding in a proximal direction within the holes (H_{A}, H_{B}). The other retainer (40) is then introduced the same way. Fig. 9d shows the situation once the two retainers (40) are positioned besides the holes (H_{A}, H_{B}) of the parts to be connected. Then, the head (21) of the bolt (20) is introduced proximally through the holes (H_{A}, H_{B}) until the proximal surface (211) of the head (21) reaches a position distally past the distal surface (42) of the retainers (40). During this process, the elongated projections (44) slide longitudinally within the first and second longitudinal grooves (213, 124) provided respectively at the lateral surface of the head (21) of the bolt (2) and at the lateral surface (123) of the body (12) of the washer (10). As shown in Fig. 9f, the bolt (20) is then rotated 90° until the first axis (A₂₁) of the head (21) is perpendicular to the second axis (A₁₂) of the body (12). Finally, the bolt (20) is pulled proximally until the proximal surface (211) of the head (21) of the bolt (20) abuts against the distal surface (42) of the retainer (40). Naturally, the bulges (45) of the retainers (40) then enter the holes (212) of the bolts (20), thereby preventing rotation of the bolts (20) with respect to the retainers (40). In turn, by the retainer (40) cannot rotate because the elongated projections (44) protruding proximally within the holes (H_{A}, H_{B}) are sandwiched between the edge of said holes (H_{A}, H_{B}) and the body (12) of the washer (10). Finally, the nut (30) is threaded into the threaded portion (222) of the shank (22) of the bolt (20) until a tight connection is achieved.

## Claims

1. Blind fastening washer (10), **characterized by** comprising:
- a base (11) having a distal surface (111);
- a body (12) with an elongated cross-section stemming along a longitudinal direction from a portion of the distal surface (111) of the base (11), the body (12) further comprising a longitudinal orifice (121); and
- at least a longitudinal protrusion (13) stemming from a distal surface (122) of the body (12) adjacent the orifice (121),
such that, when a shank (22) of a bolt (20) having a head (21) with an elongated cross-section is longitudinally introduced in a proximal direction into the orifice (121) of the body (12), with a first axis (A₂₁) of the head (21) of the bolt (20) in perpendicular to a second axis (A₁₂) of the body (12), until a proximal surface (211) of the head (21) of the bolt (20) rests on said distal surface (122) of the body (12), the head (21) of the bolt (20) abuts laterally against said longitudinal protrusion (13), said protrusion (13) preventing rotation of the bolt (20) with respect to the washer (10).

2. Blind fastening washer (10) according to claim 1, where a shape of the base (11) is cylindrical with a circular directrix and a generatrix parallel to the longitudinal direction.

3. Blind fastening washer (10) according to any of the previous claims, where the distal surface (111) of the base (11) is flat.

4. Blind fastening washer (10) according to claim 3, where the flat distal surface (111) of the base (11) is perpendicular to the longitudinal direction.

5. Blind fastening washer (10) according to any of the previous claims, where a shape of the body (12) is cylindrical with an elongated directrix and a generatrix parallel to the longitudinal direction.

6. Blind fastening washer (10) according to claim 5, where the elongated directrix is essentially rectangular.

7. Blind fastening washer (10) according to any of the previous claims, where the longitudinal protrusion (13) has an essentially flat inner wall (131).

8. Blind fastening washer (10) according to claim 7, where the essentially flat inner wall (131) of the longitudinal protrusion (13) is essentially tangent to a distal end of the orifice (121) of the body (12).

9. Blind fastening washer (10) according to any of the previous claims, comprising two longitudinal protrusions (13) stemming from the distal surface (122) of the body (12) at either side of the orifice (121) such that, when the shank (22) of the bolt (20) is introduced into the orifice (121) of the body (12), the head (21) of the bolt (20) fits snugly between said longitudinal protrusions (13), said protrusions (13) preventing rotation of the bolt (20) with respect to the washer (10).

10. Blind fastening system **characterized by** comprising:
- a washer (10) according to any of claims 1-9;
- a bolt (20) comprising a head (21) with an elongated cross-section and a shank (22) having a threaded portion (222), where a diameter of the shank (22) is configured for passing through the orifice (121) of the washer (10) and the head (21) of the bolt (20) is configured to abut against the longitudinal protrusion (13) of the washer (10) when the first axis (A₂₁) of the head (21) is perpendicular to the second axis (A₁₂) of the body (12), such that said longitudinal protrusion (13) prevents rotation of the head (21) of the bolt (20) with respect to the washer (10); and
- a nut (30) configured for being threaded to the threaded portion (222) of the shank (22) of the bolt (20).

11. Blind fastening system according to claim 10, further comprising two retainers (40) each comprising a proximal surface (41), a distal surface (42), and an essentially flat lateral surface (43) matching a lateral surface (123) of the body (12), each retainer (40) further comprising least one elongated projection (44) protruding in a proximal direction from the proximal surface (41) adjacent the lateral surface (43), and one bulge (45) protruding in a distal direction from the distal surface (42), where the proximal surface (211) of the head (21) of the bolt (20) further comprises two recesses (212) configured for receiving the bulge (45) of each retainer (40), where a lateral surface of the head (21) of the bolt (2) further comprises a pair of first longitudinal grooves (113) configured for receiving the elongated projections (44) of each retainer (45), and where a distal portion of each lateral surface (123) of the body (12) further comprises a pair of second longitudinal grooves (124) configured for receiving the elongated projections (44) of each retainer (45).

12. Blind fastening system according to any of claims 10-11, where the washer (10), the bolt (20) and the nut (30) are provided in a disassembled condition.

13. Blind fastening system according to any of claims 10-11, where the washer (10), the bolt (20) and the nut (30) are provided in a pre-assembled condition where:
- the shank (22) of the bolt (20) is housed within the orifice (121) of the body (12) of the washer (10) with the first axis (A₂₁) of the head (21) being parallel to the second axis (A₁₂) of the body (12), such that the proximal surface (211) of the head (21) of the bolt (20) rests on distal surface (132) of the longitudinal protrusion (13) of the washer (10); and
- the nut (30) is threaded to a length of the threaded portion (222) of the shank (22) of the nut (20) protruding from a proximal end of the orifice (121) of the washer (10).

14. Method for fastening two parts (A, B) using the disassembled blind fastening system according to claim 12, where the two parts (A, B) have respective elongated holes (H_{A}, H_{B}) aligned in the longitudinal direction, the method comprising the steps of:
- introducing longitudinally in a distal direction the head (21) of the bolt (20) through the holes (H_{A}, H_{B}), with the first axis (A₂₁) of said head (21) in parallel to a common third axis (A_{H}) of the holes (H_{A}, H_{B}), until the head (21) of the bolt (20) makes it completely through the holes (H_{A}, H_{B});
- rotating the bolt (20) until the first axis (A₂₁) of the head (21) is essentially perpendicular to the second axis (A₁₂) of the body (12);
- introducing longitudinally in a distal direction the body (12) of the washer (10) through the holes (H_{A}, H_{B}) with the second axis (A₁₂) of said body (12) in parallel to the third axis (A_{H}) of the hole (H_{A}, H_{B}), such that the shank (22) of the bolt (20) passes through the orifice (121) of the washer (10), until the head (21) of the bolt (20) abuts against the longitudinal protrusion (13) of the washer (10); and
- threading the nut (30) to the length of the threaded portion (222) of the shank (22) of the bolt (20) protruding from the proximal end of the orifice (121) of the washer (10).

15. Method for fastening two parts (A, B) using the pre-assembled blind fastening system according to claim 13 when dependent on claim 10, where the two parts (A, B) have respective elongated holes (H_{A}, H_{B}) aligned in the longitudinal direction, the method comprising the steps of:
- introducing longitudinally in a distal direction the head (21) of the bolt (20) and the body (12) of the washer (10) through the holes (H_{A}, H_{B}), with the respective first and second axis (A₂₁, A₁₂) of said head (21) and said body (12) in parallel to the common third axis (A_{H}) of the holes (H_{A}, H_{B}), until the head (21) of the bolt (20) makes it completely through the holes (H_{A}, H_{B});
- rotating the bolt (20) until the first axis (A₂₁) of the head (21) is essentially perpendicular to the second axis (A₁₂) of the body (12); and
- threading the nut (30) further along the length of the threaded portion (222) of the shank (22) of the bolt (20) protruding from the proximal end of the orifice (121) of the washer (10).

16. Method for fastening two parts (A, B) using the pre-assembled blind fastening system according to claim 13 when dependent on claim 11, comprising the steps of:
- introducing the retainers (40) through the holes (H_{A}, H_{B}) longitudinally in a distal direction;
- displacing the retainers (40) laterally with the base (41) in contact with a distal surface (DS) surrounding the holes (H_{A}, H_{B}) until the inner surface (43) is essentially flush with an edge of the holes (H_{A}, H_{B}) and the elongated projections (44) project proximally through the holes (H_{A}, H_{B});
- introducing longitudinally in a distal direction the head (21) of the bolt (20) and the body (12) of the washer (10) through the holes (H_{A}, H_{B}), with the respective first and second axis (A₂₁, A₁₂) of said head (21) and said body (12) in parallel to the common third axis (A_{H}) of the holes (H_{A}, H_{B}), such that the projections (44) of the retainers (40) slide longitudinally along the grooves (124) of the body (12) of the washer (10), until the head (21) of the bolt (20) makes it completely through the holes (H_{A}, H_{B}) past the distal surface (42) of the retainers (40);
- rotating the bolt (20) until the first axis (A₂₁) of the head (21) is essentially perpendicular to the second axis (A₁₂) of the body (12);
- pulling the bolt (20) proximally until the proximal surface (211) of the head (21) of the bolt (20) abuts against the distal surface (42) of the retainers (40) with the bulges (45) of said retainers (40) housed within the recesses (212) of said proximal surface (211) of the head (21) of the bolt (20); and
- threading the nut (30) further along the length of the threaded portion (222) of the shank (22) of the bolt (20) protruding from the proximal end of the orifice (121) of the washer (10).
